# EUROPEAN PATENT APPLICATION

(11) **EP 3 159 576 A1**
(43) Date of publication of application: **26.04.2017**
(21) Application number: 16190097.2
(22) Date of filing: 22.09.2016
(51) Int. Cl.: F16H 1/28, F02C 7/36, F16C 19/28

(54) **DOUBLE ROW CYLINDRICAL ROLLER BEARING WITH HIGH LENGTH TO DIAMETER RATIO ROLLERS**

(30) Priority: 25.09.2015 US 201514865239
(71) Applicant: General Electric Company, Schenectady, NY 12345 (US)
(72) Inventor: HASTING, William Howard, Cincinnati, OH 45215 (US); FISHER, Kenneth Lee, Niskayuna, NY 12309 (US); BRADLEY, Donald Albert, Cincinnati, OH 45215 (US); DICKMAN, Joseph Robert, Cincinnati, OH 45215 (US)
(74) Representative: Williams, Andrew Richard

(57) **Abstract**

A planet gearbox is provided for connection to a carrier of an epicyclic gearing arrangement with a single input and single output and including a sun gear 80, a ring gear 86 and at least one double helix planet gear rotatable on a cylindrical roller bearing wherein the ratio of each cylindrical roller's length to each cylindrical roller's 104 diameter exceeds 1.0. A gas turbine engine 10 includes a shaft 36 coupling a compressor 22 of a compressor section to a turbine 30 of a turbine section. An epicyclic gearing arrangement has a single input from the shaft coupled to a sun gear, a single output from the carrier that is coupled to the shaft of a fan and includes a planet gearbox with cylindrical rollers having a length-to-diameter ratio exceeding 1.0.

## Description

### FIELD

The present subject matter relates generally to a cylindrical roller bearing, or more particularly to a cylindrical roller bearing for the planet gear in an epicyclic gearbox in a gas turbine engine.

### BACKGROUND

A gas turbine engine generally includes a fan and a core arranged in flow communication with one another with the core disposed downstream of the fan in the direction of the flow through the gas turbine. The core of the gas turbine engine generally includes, in serial flow order, a compressor section, a combustion section, a turbine section, and an exhaust section. With multi-shaft gas turbine engines, the compressor section can include a high pressure compressor (HP compressor) disposed downstream of a low pressure compressor (LP compressor), and the turbine section can similarly include a low pressure turbine (LP turbine) disposed downstream of a high pressure turbine (HP turbine). With such a configuration, the HP compressor is coupled with the HP turbine via a high pressure shaft (HP shaft), and the LP compressor is coupled with the LP turbine via a low pressure shaft (LP shaft).

In operation, at least a portion of air over the fan is provided to an inlet of the core. Such portion of the air is progressively compressed by the LP compressor and then by the HP compressor until the compressed air reaches the combustion section. Fuel is mixed with the compressed air and burned within the combustion section to provide combustion gases. The combustion gases are routed from the combustion section through the HP turbine and then through the LP turbine. The flow of combustion gasses through the turbine section drives the HP turbine and the LP turbine, each of which in turn drives a respective one of the HP compressor and the LP compressor via the HP shaft and the LP shaft. The combustion gases are then routed through the exhaust section, e.g., to atmosphere.

The LP turbine drives the LP shaft, which drives the LP compressor. In addition to driving the LP compressor, the LP shaft can drive the fan through a fan gearbox of an epicyclic gearing arrangement, which allows the fan to be rotated at fewer revolutions per unit of time than the rotational speed of the LP shaft for greater efficiency. The fan gearbox rotatably supports a sun gear that is disposed centrally with respect to a ring gear and a plurality of planet gears, which are disposed around the sun gear and engage between the sun gear and the ring gear. The LP shaft provides the input to the epicyclic gearing arrangement by being coupled to the sun gear, while the fan is coupled to rotate in unison with the carrier of the planet gears. Each planet gear meshes with the sun gear and with the ring gear, which is held stationary. The shaft of the fan is rotatable on its own bearing that is housed in a sun gearbox, which is also called the fan gearbox that is fixed to the rotationally central region of a carrier. Each planet gear is rotatable on its own bearing that is housed within a planet gearbox, which is fixed to the peripheral region of the carrier.

For any given gas turbine engine application, the planet gears are designed to provide a set reduction ratio between the rotational speed of the LP shaft and the rotational speed of the fan shaft. Because each planet gearbox that houses each planet gear is disposed within the flow path of the gas turbine engine, the challenge is to design on the one hand a reliable and robust planet gearbox that meets all flight conditions of the engine while on the other hand designing a planet gearbox that is compact sufficiently to fit inside the flow path in a way that does not require the entire engine size to be larger and heavier than otherwise would be needed in order to accommodate the planet gearbox.

Ceramic rolling elements are lighter in weight and known to provide a longer life than steel rollers, however ceramic rolling elements are used in the form of ball roller bearings or spherical roller bearings, which are not axially compliant and therefore not compatible with some helical gear configurations.

Accordingly, a gas turbine engine having one or more components for reducing the envelope required for the epicyclic gearing between the fan and the LP shaft would be useful. Specifically, a gas turbine engine having one or more components for reducing the envelope required for the planet gearboxes housing the planet gears of the planetary gearing would be particularly beneficial.

### BRIEF DESCRIPTION

Aspects and advantages of the invention will be set forth in part in the following description, or may be obvious from the description, or may be learned through practice of the invention.

In one exemplary aspect of the present disclosure, a bearing for a planet gear of the power gearbox of a gas turbine engine is provided. The bearing is intended for an epicyclic gearing arrangement. In one exemplary planetary aspect, each planet gear meshes with a sun gear input and a stationary ring gear to impart an output of reduced rotational speed to the carrier of the planet gears. In another exemplary star aspect, each planet gear meshes with a sun gear input while the carrier is held stationary to impart an output of reduced rotational speed to the ring gear. The input is provided by rotation of the LP shaft of a turbofan engine, and the output is provided to rotate the fan shaft of the turbofan engine. The planet bearing is inner-race-guided, and the inner race is a single piece having at least one roller track. The roller cage is designed with a small clearance to the inner race. The teeth on each of the planet gear, the sun gear and the ring gear desirably are arranged in a double helical pattern so that the planet gear is restrained axially by both the sun gear and the ring gear. The bearing uses a plurality of cylindrical rollers, which have outer cylindrical surfaces that rotatably contact both the inner race and the outer race, which is formed by the cylindrical inner surface of the planet gear. The outer cylindrical surface of each roller has an axial length that is more than one times the diameter of the roller and desirably more than 1.3 times the diameter and up to and including 1.8 times the diameter.

In another exemplary aspect of the present disclosure, a gas turbine engine is provided with a power gearbox that includes planet gears rotatably supported by a planet bearing. The gas turbine engine includes a compressor section including a low pressure compressor and a turbine section located downstream of the compressor section. The turbine section includes a high pressure (HP) turbine and a low pressure (LP) turbine. The gas turbine engine also includes a low pressure shaft mechanically coupling the low pressure compressor to the low pressure turbine via an epicyclic gearing arrangement, which includes one or more planet bearings as summarily described above and in more detail hereinafter.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary gas turbine engine according to various embodiments of the present disclosure.
FIG. 2 is a view partially in perspective and partially in cross-section of a one quarter segment of an epicyclic gearing between the fan shaft and the LP shaft of the exemplary gas turbine engine of FIG. 1.
FIG. 3 is a cross - sectional view taken generally along the lines of sight designated 3---3 in FIG. 2.
FIG. 4 is a cross - sectional view taken generally along the lines of sight designated 4---4 in FIG. 2.
FIG. 5 is an elevated perspective view of disassembled exemplary components of the exemplary gearing arrangement of FIG. 2.
FIG. 6 is an enlarged view of what is shown within the balloon designated by the numeral 6 in FIG. 4.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. As used herein, the fluid can be a gas such as air or a liquid such as a lubricant.

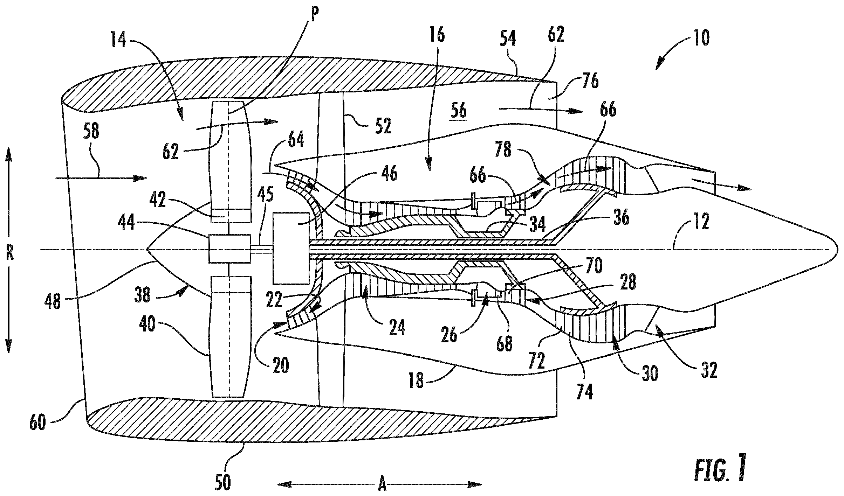

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R that is normal to the axial direction A. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. As schematically shown in FIG. 1, the outer casing 18 encases, in serial flow relationship, a compressor section including a booster or low pressure (LP) compressor 22 followed downstream by a high pressure (HP) compressor 24; a combustion section 26; a turbine section including a high pressure (HP) turbine 28 followed downstream by a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22 to rotate them in unison. The compressor section, combustion section 26, turbine section, and nozzle section 32 together define a core air flowpath.

For the embodiment depicted in FIG. 1, the fan section 14 includes a variable pitch fan 38 having a plurality of fan blades 40 coupled to a disk 42 in a spaced apart manner. As depicted in FIG. 1, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 via a fan shaft 45 that is powered by the LP shaft 36 across a power gear box 46. The power gear box 46 includes a plurality of gears for adjusting the rotational speed of the fan shaft 45 and thus the fan 38 relative to the LP shaft 36 to a more efficient rotational fan speed.

Referring still to the exemplary embodiment of FIG. 1, the disk 42 is covered by a rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Alternatively, the nacelle 50 also may be supported by struts of a structural fan frame. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrow 62 is directed or routed into the bypass airflow passage 56, and a second portion of the air 58 as indicated by arrow 64 is directed or routed into the upstream section of the core air flowpath, or more specifically into the inlet 20 of the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed into and expand through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed into and expand through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and rotation of the fan 38 via the power gearbox 46.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

It should be appreciated, however, that the exemplary turbofan engine 10 depicted in FIG. 1 is by way of example only, and that in other exemplary embodiments, the turbofan engine 10 may have any other suitable configuration. For example, in other exemplary embodiments, the fan 38 may be configured in any other suitable manner (e.g., as a fixed pitch fan) and further may be supported using any other suitable fan frame configuration. Moreover, it also should be appreciated that in other exemplary embodiments, any other suitable LP compressor 22 configuration may be utilized. It also should be appreciated, that in still other exemplary embodiments, aspects of the present disclosure may be incorporated into any other suitable gas turbine engine. For example, in other exemplary embodiments, aspects of the present disclosure may be incorporated into, e.g., a turboshaft engine, turboprop engine, turbocore engine, turbojet engine, etc.

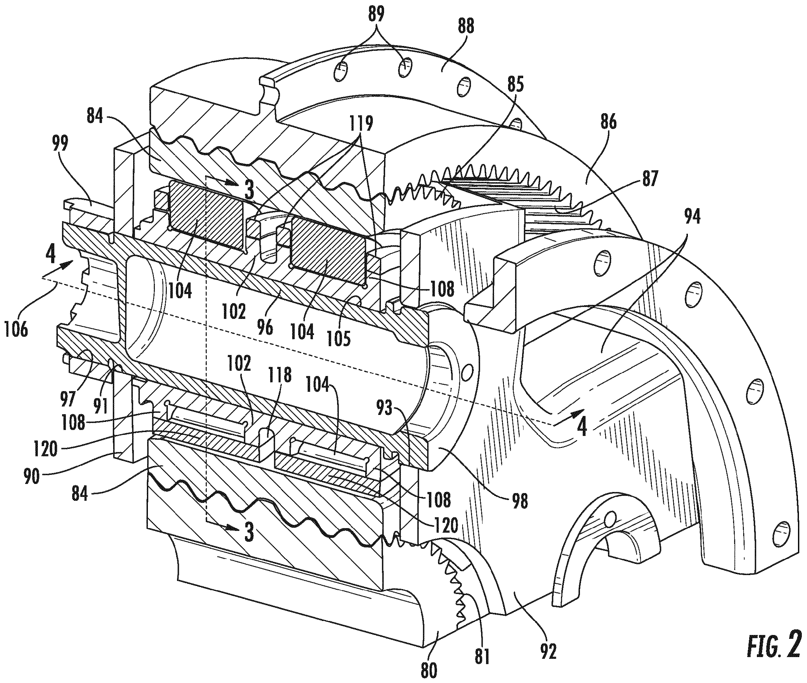

FIG. 2 depicts portions of the power gearbox 46 constructed according to an aspect of the present disclosure. For purposes of illustrating features of the planet bearing that rotatably supports each planet gear, FIG. 2 illustrates a view rendered partly in perspective and partly in cross-section and focused on the planet bearing portions of a one quarter section of an exemplary embodiment of a planetary gearbox configuration that desirably serves as a component of the power gearbox 46. The power gearbox 46 is an epicyclic type and has a central axis of rotation that is coincident with the longitudinal axis 12 shown in FIG. 1.

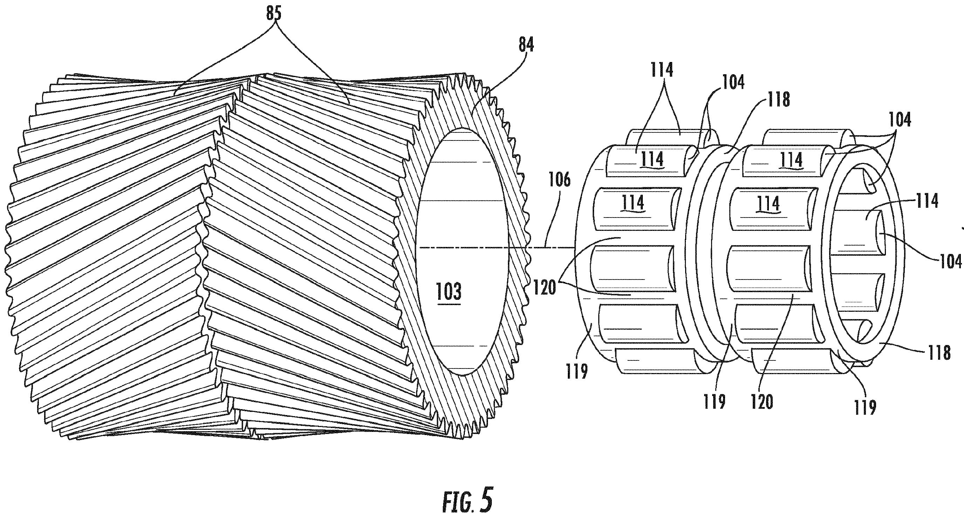

As schematically shown in FIG. 2 for example, the power gearbox 46 includes a centrally-located sun gear 80 that is rotatable about the longitudinal axis 12 shown in FIG. 1. The bearing that rotationally supports the sun gear 80 has been omitted from the drawings, as the bearing for the sun gear 80 is not the focus of the present disclosure. The sun gear 80 desirably has a double-helical pattern of gear teeth 81. A carrier surrounds the sun gear 80, which is rotatable with respect to the carrier. The carrier carries at least one planet gear 84 and desirably an annular array of planet gears 84. In the illustrated example there are four planet gears 84 but varying numbers of planet gears 84 may be used. As shown in FIG. 5, each planet gear 84 desirably has a double helical pattern of gear teeth 85 that are configured to mesh with the gear teeth 81 of the sun gear 80.

As schematically shown in FIG. 2 for example, the power gearbox 46 desirably is an epicyclic gearing arrangement having a ring gear 86 that is disposed circumferentially around the sun gear 80 and the planet gears 84. In this particular embodiment, the ring gear 86 is coupled to the outer casing 18 in a manner that is not illustrated in FIG. 1, as this particular arrangement can be performed in any of a number of conventional manners, any one of which being suitable for purposes of illustrating exemplary embodiments of the present disclosure. For example, the ring gear 86 can be fixed (as by being mechanically bolted or welded) to the outer casing 18 via a central circumferential flange 88 that is drilled with a plurality of axial holes 89 therethrough. In an alternative embodiment employing a star configuration of an epicyclic gearing arrangement, it is the carrier that is coupled to the outer casing 18, and the specifics of this coupling also are not needed for the explanation of the desired aspects of the present invention. However, in both embodiments, the ring gear 86 is rotatably enmeshed with each planet gear 84, which also is rotatably enmeshed with the sun gear 80, and thus the ring gear 86 also desirably has a double helical pattern of gear teeth 87 configured to mesh with the teeth 85 of the planet gear 84.

Collectively the sun gear 80, the planet gears 84, and the ring gear 86 constitute a gear train. Each of the planet gears 84 meshes with both the sun gear 80 and the ring gear 86. The sun gear 80, planet gears 84, and ring gear 86 may be made from steel alloys. The epicyclic gearing arrangement contemplated herein desirably is a planetary configuration that has only a single input and a single output, and the ring gear 86 is held stationary. In operation, the sun gear 80 is turned by an input that is the LP shaft, while the carrier that carries the planet gearboxes is coupled to a mechanical load that is the fan shaft 45 shown in FIG. 1. Thus, the power gearbox 46 is effective to reduce the rotational speed of the sun gear 80 in a known manner to a rotational speed appropriate for the load coupled to the carrier, namely, rotation of the fan shaft 45.

Each of the planet gears 84 is rotatably carried by a bearing that in turn is carried by a planet gearbox that in turn is carried by the carrier. The construction and mounting of the bearing for one planet gear 84 will be described with the understanding that each of the planet gears 84 is constructed and mounted identically, though to different points on the carrier.

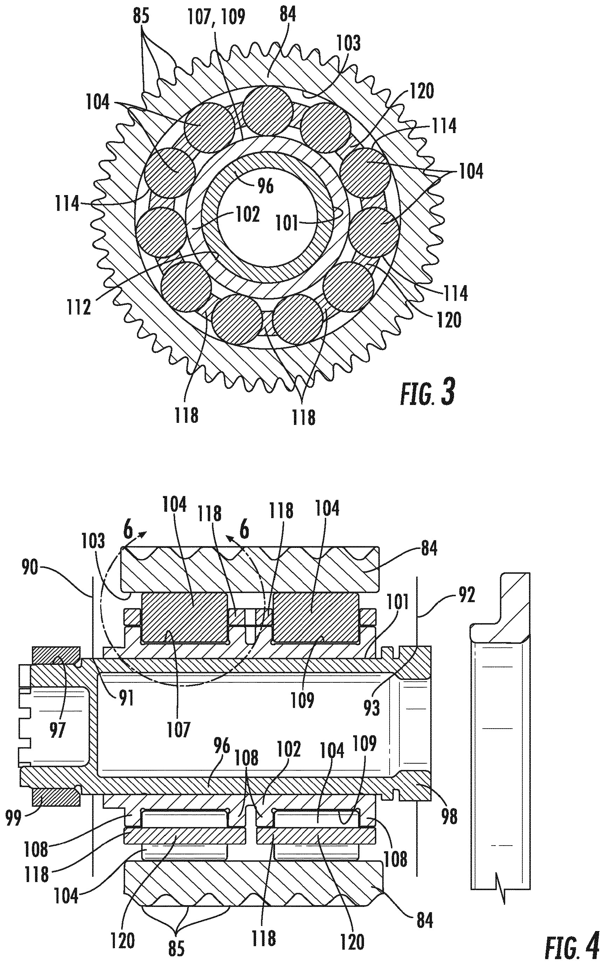

As schematically shown in FIGs. 2 and 4 for example, the carrier includes a forward wall 90 and an aft wall 92 spaced axially apart from the forward wall 90 and together forming part of the carrier of each planet gearbox. Each of the forward wall 90 and the aft wall 92 respectively defines therethrough a respective coaxial bore 91 and 93. The carrier desirably includes a plurality of sidewalls 94 that extend axially between and connect the forward and aft walls 90, 92 of the carrier. Desirably, pairs of the sidewalls 94 are disposed on opposite sides of the coaxial bores 91, 93 defined respectively in the forward and aft walls 90, 92 of the carrier. In one exemplary embodiment employing a planetary configuration of an epicyclic gearing arrangement, the carrier is non-rotatably coupled to the fan shaft 45 in a conventional manner so that they rotate in unison at the same speed, but the manner of this coupling is not critical to an understanding of the present disclosure and thus need not be further discussed. In an alternative embodiment employing a star configuration of an epicyclic gearing arrangement, it is the ring gear that is non-rotatably coupled to the fan shaft 45 in a conventional manner so that they rotate in unison at the same speed, but the manner of this coupling is not critical to an understanding of the present disclosure and thus need not be further discussed.

As shown in FIGs. 2 - 4 and 6 for example, a support pin 96 is hollow, generally cylindrical, and has forward and aft ends. The support pin 96 is provided to mount the bearing of the planet gear 84 to the carrier and thus is configured to be fixed to the carrier. As shown in FIG. 2 for example, each opposite end of the support pin 96 is received in one of the bores 91 and 93 defined in the carrier. As shown in FIGs. 2 and 4 for example, the forward end of the support pin 96 includes a threaded, reduced-diameter surface 97, while the aft end includes an annular, radially-outwardly-extending flange 98. A retainer 99 (in this example a threaded locknut) engages the reduced-diameter surface 97 at the forward end to secure the support pin 96 in position against rearward axial movement.

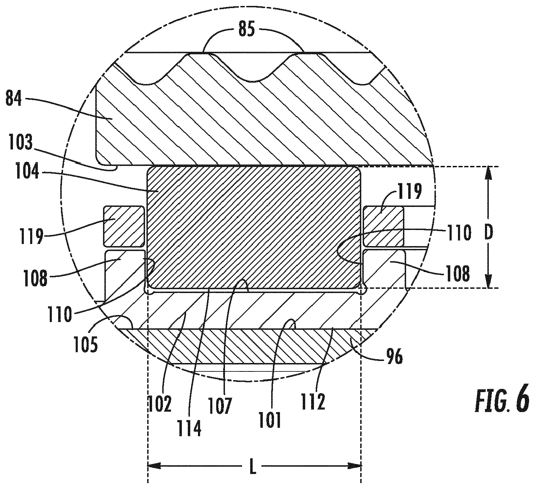

As shown in FIGs. 3 and 6 for example, the support pin 96 defines a cylindrical outer surface 101. As shown in FIG. 2, the cylindrical outer surface 101 of the support pin 96 is disposed equidistant from a central axis 106 that extends in an axial direction through the support pin 96. This central axis 106 also defines the axis of rotation for the planet gear 84.

The support pin 96 desirably includes a plurality of feed holes formed therein and extending radially therethrough, but as the number and placement of these feed holes is conventional as far as the present disclosure is concerned, none of them is shown in the drawings herein. In operation, oil is fed through the opening at the aft end of the support pin 96 and into the interior of the hollow support pin 96 from whence the oil flows through such feed holes to an inner race 102, providing both cooling and lubrication.

As shown in FIG. 6 for example, the planet bearing includes an inner race 102 that defines a cylindrical inner surface 112 that is non-rotatably connected to the cylindrical outer surface 101 of the support pin 96. Desirably, the inner cylindrical surface 112 of the inner race 102 is press-fitted to the cylindrical outer surface 101 of the support pin 96. The planet bearing is inner race guided, and accordingly the inner race 102 desirably is a single integral component having disposed opposite the inner surface 112 an outer surface that defines at least one roller track that defines a roller raceway. Each respective track is defined by a pair of guiderails 108, which are spaced apart from each other in the axial direction and extend circumferentially around the inner race 102 and provide respective guiding surfaces to each respective roller cage 118 (described more fully below). As contemplated herein, the inner race 102 can include a single track or a plurality of tracks such as a dual track inner race 102 or a triple track inner race 102, etc. However, explanation of the structure and operation of the planet gearbox herein will use the specific example of a dual track inner race 102, thus informing how additional tracks would be accommodated or a single track would remain after the elimination of one of the dual tracks. Accordingly, in a dual track embodiment, the outer surface of the inner race 102 incorporates two pairs of raised guiderails 108, which extend continuously in the circumferential direction around the inner race 102 and define a pair of annular raceways, a forward raceway 107 and an aft raceway 109, respectively. As schematically shown in FIG. 6 for example, the raised guiderails 108 of each of the pair of tracks define a pair of radially extending sidewalls 110 that are spaced apart in the axial direction from each other. The respective sidewalls 110 of each pair of raised guiderails 108 define the two extreme edges of one of the pair of raceways 107, 109 that form part of one of the pair of tracks that are defined in the outer surface of the dual track inner race 102. The use of a single inner race with dual raceways 107, 109 spaced axially apart from each other provides for good concentricity between sets of rollers 104, but two separate inner races could be used as well. The axial dimension of the inner race 102 desirably is sized so that the inner race 102 cannot move axially relative to the opposing and axially spaced apart walls 90, 92 of the carrier.

As shown in FIG. 4 for example, each of the pair of tracks extends circumferentially around the outer surface of the inner race 102. Each of the pair of tracks is separated in the axial direction from the other of the pair of tracks. Each of the pair of tracks is disposed parallel in the circumferential direction with respect to the other of the pair of tracks. Each of the pair of tracks defines a surface in the form of a raceway 107 or 109 that extends circumferentially and concentrically with respect to the cylindrical inner surface of the 112 of the inner race 102.

Each of the pair of tracks in the inner race 102 is configured to receive and rotatably guide therein a respective plurality of cylindrical rollers 104, which are free to rotate relative to both the inner race 102 and the outer race of the planet bearing. Thus, the raceways 107, 109 of the inner race 102 receive rollers 104, in two tandem rings. A first plurality of cylindrical rollers 104 is rotatably disposed on the raceway 107 within a first one of the pair of tracks of the inner race 102. Similarly, a second plurality of cylindrical rollers 104 is rotatably disposed on the raceway 109 within a second one of the pair of tracks of the inner race 102. Thus, the raceways 107, 109 of the inner race 102 contact a portion of each of the cylindrical outer surfaces 114 of the cylindrical rollers 104 disposed in the respective track.

Leaving aside for the moment the usual rounded corners and crown radius at each opposite end thereof, as schematically shown in FIGs. 2, 5 and 6 for example, in profile view each of the rollers 104 has a uniform cylindrical shape. As shown in FIG. 5 for example, each cylindrical roller 104 defines a cylindrical outer surface 114 that is disposed with a central axis of rotation that extends in the axial direction of the roller 104 and extends in a direction that is parallel to the rotational axis 106 of the rotationally supported planet gear 84. Desirably, at least a central section of the cylindrical outer surface 114 of each cylindrical roller 104 is disposed uniformly equidistant from the roller's central axis of rotation along a central section of the axial length of the cylindrical roller 104. As schematically shown in FIG. 6 for example, each opposite end of each roller 104 will have the usual rounded corners. Though the conventionally commensurate crown radius is too small to be discernible in any of the FIGs., the rounded corners and crown radius serve to diminish the diameter of the cylindrical outer surface 114 of the roller 104 at those end the locations. It is the central section of the cylindrical outer surface 114 of each roller 104 that is bounded at each opposite end by the rounded corners and crown radius, and it is this central section of the cylindrical outer surface 114 that is the surface that will come into contact with the respective raceway 107, 109 of the inner race 102 during operation of the planet bearing.

As shown in FIG. 6 for example, the cylindrical outer surface 114 of each cylindrical roller 104 is defined by a diameter D that extends through the central axis of rotation of the roller 104 along a direction that is normal to the central axis of rotation of the roller 104 at the central section of the axial length of the roller 104. As schematically shown in FIG. 6 for example, the outer cylindrical surface 114 of each cylindrical roller 104 defines a length L measured from one end of the roller 104 to the opposite end of the roller 104 in the direction parallel to the axis of rotation of the cylindrical roller 104 and including the portions with the rounded corners and crown radius. The ratio of each cylindrical roller's length L to each cylindrical roller's diameter D is greater than one. Desirably, the ratio of each cylindrical roller's length to each cylindrical roller's diameter is greater than 1.3. For example, a roller having a diameter D of 32 mm desirably has a length L of 53 mm. Desirably, each cylindrical roller 104 has a length-to-diameter ratio (L / D) that falls within the range from 1.3 to 1.8, inclusive. The cylindrical rollers 104 can comprise a ceramic material of a known composition, for example silicon nitride (Si.sub.3Ni.sub.4).

As shown in FIGs. 3 and 6 for example, the outer race of the planet bearing is formed by the cylindrical interior surface 103 of the planet gear 84. Thus, the outer race 84 of the planet bearing defines an outer cylindrical surface that defines a gearing surface 85 that is configured to mesh with both the gearing surface 81 of the sun gear 80 and the gearing surface 87 of the ring gear 86. Desirably, as shown in FIG. 5 for example, the gearing surface 85 of each cylindrical outer race 84 is a double helical gearing surface with the bias of each one of the two double helical gearing surfaces of the outer race 84 being disposed nonparallel with the other one of the two double helical gearing surfaces of the outer race.

Because each of the gear meshes (sun-to-planet and planet-to-ring) has a double-helical gear tooth profile, there is no relative movement possible between the sun gear 80 and the planet gears 84 in a direction that is parallel to the axis A. Nor is there any movement in this direction between the planet gears 84 and the ring gear 86. The double helical pattern restrains the planet gear 84 axially to both the sun gear 80 and the ring gear 86, and the planet gears 84 are mounted to provide an axial degree of freedom to the carrier.

As shown in FIG. 3 for example, a plurality of cylindrical rollers 104 is disposed between the inner race 102 and the cylindrical interior surface 103 of the planet gear 84 that serves as the outer race of the planet bearing. As shown in FIG. 4 for example, the inner cylindrical surface 103 of the outer race 84 of the planet bearing rotatably contacts both the first plurality of cylindrical rollers 104 and the second plurality of cylindrical rollers 104.

As shown in FIGs. 3 - 5 for example, the planet gearbox desirably includes a roller cage 118 disposed between the inner race 102 and the outer race 84 and free to rotate with respect to both, but at a different speed than the speed of rotation of the outer race. Because the planet bearing is inner-race-guided, the roller cage 118 is designed with a small clearance to the inner race 102, and this clearance desirably is on the order of 0.005 to 0.050 inches inclusive. In the embodiment shown in FIGs. 3 and 5 for example, because the inner race 102 has side-by-side dual tracks, a separate roller cage 118 is provided over each of the dual tracks. As shown in FIGs. 3 and 5 for example, each roller cage 118 is configured to maintain in each respective track with its respective raceway 107, 109 of the inner race 102, a respective separation in the circumferential direction between each respective cylindrical roller 104 in each pair of circumferentially adjacent cylindrical rollers 104 in that respective track. As shown in FIG. 5 for example, the roller cage 118 defines a first circumferential row and a second circumferential row separated in the axial direction from the first circumferential row. Each circumferential row of each respective roller cage 118 is disposed above a respective track of the pair of tracks of the inner race 102. As shown in FIG. 6 for example, respective shoulder elements 119 of the roller cage 118 are disposed above a respective raised guiderail 108 of the inner race 102. As shown in circumferential cross-section in FIG. 3 and axial cross-section in FIG. 4 for example, respective web elements 120 of the roller cage 118 are disposed to extend axially between the opposing shoulder elements 119 of the roller cage 118.

Each circumferential row in the roller cage 118 defines a plurality of generally cylindrical openings. Each generally cylindrical opening of the roller cage 118 is defined by a major axis in the axial direction and a minor axis in the circumferential direction. As shown in FIG. 5 for example, each generally cylindrical opening of the roller cage 118 is bounded by a pair of opposing and spaced apart web elements 120 in the axial direction and by a pair of opposing and spaced apart shoulder elements 119 in the circumferential direction. The major axis of each generally cylindrical opening is configured to accommodate the length L of an individual roller 104, while the minor axis of each generally cylindrical opening is configured to accommodate the diameter D of an individual roller 104. As shown in FIGs. 3 and 5 for example, the openings in each row are spaced equidistantly apart circumferentially around the roller cage 118 with the number of openings in each row being equal to the number of cylindrical rollers 104 disposed in the respective one of the pair of tracks disposed beneath the respective row of the roller cage 118. Accordingly, as shown in FIG. 5 for example, each respective cylindrical roller 104 is disposed with its cylindrical outer surface 114 extending through a respective opening defined by the roller cage 118.

The planet gearbox with its planet bearing apparatus described herein has several advantages over the prior art. It reduces the diameter of the planet gearbox that is required to transfer a given amount of power. By extending the length L of the each roller 104 beyond 1.0 times the diameter D of the roller 104, the planet bearing provides a greatly increased flat length that enables the planet bearing to carry more load so that the planet bearing can have a smaller diameter or require fewer rollers 104. This reduction in the diameter of each roller 104 allows a reduction in the diameter of the planet gears 84 and accordingly a reduction in the diameter of the entire planet gearbox. The smaller diameter makes it easier to package the gearbox in the engine, thereby affording the designers of the engine greater flexibility in their arrangement of other components of the engine while maintaining an optimum size and flow path for the engine, thereby maximizing engine efficiency and minimizing the weight of the engine. Since the planet gear 84 often will have a wider face width than the axial spacing required by the planet bearings, the increased bearing width due to the longer rollers 104 in most cases will not increase the overall length of the planet gearbox.

For the embodiment depicted, the planet roller bearing may be formed of any suitable material. For example, in at least certain exemplary embodiments, the roller bearing may be formed of a suitable metal material, such as a chrome steel or a high carbon chrome steel. Alternatively, however in other exemplary embodiments the planet roller bearing may include one or more components formed of a suitable ceramic material.

The use of ceramic cylindrical rollers 104 allows the planet gears 84 to have a degree of freedom in the axial direction, simplifying the design. The ceramic rollers 104 are anticipated to provide at least a doubling in life compared to steel rollers, allowing the gearbox 46 to meet reliability targets. The ceramic rollers 104 also bring excellent oil-off performance, low oil flow requirements, low heat generation, and light weight design as additional benefits. Commercially the design will have a long life, which will minimize the cost of replacement over the life of the product.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

While specific embodiments of the present invention have been described, it will be apparent to those skilled in the art that various modifications thereto can be made without departing from the scope of the invention. Accordingly, the foregoing description of the preferred embodiment of the invention and the best mode for practicing the invention are provided for the purpose of illustration only and not for the purpose of limitation.

Various aspects and embodiments of the present invention are defined by the following numbered clauses:
1. A planet gearbox for connection to a carrier of an epicyclic gearing arrangement that has only a single input and a single output and that includes a sun gear and a ring gear disposed circumferentially around the planet gearbox and the sun gear, the planet gearbox comprising:
   a support pin configured to be fixed to the carrier and defining a cylindrical outer surface that is equidistant from a central axis that extends in an axial direction;
   an inner race defining a cylindrical inner surface that is non-rotatably connected to the cylindrical outer surface of the support pin, the inner race defining an outer surface that defines at least one track, each track defined in the outer surface being configured to receive and rotatably guide therein a respective plurality of cylindrical rollers;
   a respective plurality of cylindrical rollers rotatably disposed within each respective track of the inner race;
   an outer race defining an inner cylindrical surface contacting each respective plurality of cylindrical rollers, the outer race defining an outer cylindrical surface that defines a gearing surface that is configured to mesh with both the sun gear and the ring gear;
   wherein each cylindrical roller defines a cylindrical outer surface that is disposed with an axis of rotation that extends in a direction parallel to the axial direction, and the cylindrical outer surface of each cylindrical roller is defined by a diameter that extends through the axis of rotation along a direction that is normal to the axis of rotation; and
   wherein the outer cylindrical surface of each cylindrical roller defines a length in the direction parallel to the axis of rotation of the cylindrical roller, and the ratio of each cylindrical roller's length to each cylindrical roller's diameter is greater than one.
2. The planet gearbox of clause 1, wherein the ratio of each cylindrical roller's length to each cylindrical roller's diameter is greater than 1.3.
3. The planet gearbox of any preceding clause, wherein each cylindrical roller has a length-to-diameter ratio that falls within the range from 1.3 to 1.8, inclusive.
4. The planet gearbox of any preceding clause, wherein at least a central section of the cylindrical outer surface of each cylindrical roller is disposed uniformly equidistant from the axis of rotation along a central section of the axial length of the cylindrical roller.
5. The planet gearbox of any preceding clause, wherein the gearing surface of the outer race is a double helical gearing surface with the bias of each one of the two double helical gearing surfaces of the outer race being disposed nonparallel with the other one of the two double helical gearing surfaces of the outer race.
6. The planet gearbox of any preceding clause, further comprising for each respective track a respective roller cage disposed between the inner race and the outer race and configured to maintain in each respective track, a respective separation between each respective cylindrical roller in each pair of adjacent cylindrical rollers in that respective track, wherein each respective track is defined by a pair of guiderails, which are spaced apart from each other in the axial direction and extend circumferentially around the inner race and provide respective guiding surfaces to each respective roller cage.
7. The planet gearbox of any preceding clause, wherein each respective roller cage defines a circumferential row, each circumferential row of the respective roller cage being disposed above a respective track of the inner race, each circumferential row defining a plurality of generally cylindrical openings, each generally cylindrical opening defining a major axis in the axial direction and a minor axis in the circumferential direction, the openings in each row being spaced equidistantly apart circumferentially around the respective roller cage with the number of openings in each row being equal to the number of cylindrical rollers disposed in the respective track disposed beneath the respective row of the respective roller cage, wherein each respective cylindrical roller is disposed with its cylindrical outer surface extending through a respective opening defined by the respective roller cage.
8. The planet gearbox of any preceding clause, wherein each respective track extends circumferentially around the outer surface of the inner race, each of the pair of tracks being separated in the axial direction from the other of the pair of tracks, each of the pair of tracks being disposed parallel in the circumferential direction with respect to the other of the pair of tracks, each of the pair of tracks defining a raceway surface extending circumferentially and concentrically with respect to the inner cylindrical surface of the inner race and contacting a portion of each of the cylindrical outer surfaces of the cylindrical rollers disposed in the respective track, each of the pair of tracks defining a pair of radially extending sidewalls that are spaced apart in the axial direction from each other.
9. The planet gearbox of any preceding clause, wherein the inner cylindrical surface of the inner race is press-fitted to the cylindrical outer surface of the support pin.
10. The planet gearbox of any preceding clause, wherein each of the cylindrical rollers is formed of ceramic material.
11. A gas turbine engine comprising:
   a fan including a plurality of blades extending radially from a hub and rotatable about a first axis of rotation defined centrally through the hub;
   a compressor section disposed downstream from the fan and including one or more compressors;
   a turbine section located downstream of the compressor section, the turbine section including one or more turbines;
   a rotatable input shaft mechanically coupling at least one of the one or more compressors of the compressor section to rotate in unison with at least one of the one or more turbines of the turbine section;
   an epicyclic gearing arrangement that has only a single input and a single output and that includes a carrier, a sun gear rotatable about a second axis of rotation that is parallel to the first axis of rotation, a ring gear disposed circumferentially around the sun gear, at least one planet gearbox that is carried by the carrier and houses a planet gear rotatable with respect to the carrier about a second axis of rotation that is parallel to the first axis of rotation, the at least one planet gear meshes with both the sun gear and the ring gear; and
   an engine envelope surrounding the fan, the compressors, the turbines and the epicyclic gearing arrangement, wherein only one of the ring gear and the carrier is non-rotatably coupled to the engine envelope; and
   the planet gearbox further including:
      a support pin fixed to the carrier and defining a cylindrical outer surface that is equidistant from a central axis that extends in an axial direction,
      an inner race defining an inner cylindrical surface that is non-rotatably connected to the cylindrical outer surface of the support pin, the inner race defining an outer surface that defines a at least one track that is configured to receive and rotatably guide therein a respective plurality of cylindrical rollers,
      an outer race defining an inner cylindrical surface and an outer cylindrical surface that defines a gearing surface of the planet gear and that is configured to mesh with both the sun gear and the ring gear,
      a plurality of cylindrical rollers wherein the individual cylindrical rollers being distributed between each track of the inner race, each cylindrical roller being free to rotate about a third axis of rotation that is parallel to the second axis of rotation, each cylindrical roller defining a cylindrical outer surface contacting both the inner race and the inner cylindrical surface of the outer race, each cylindrical roller defining a length in the direction parallel to the third axis of rotation and wherein the ratio of each cylindrical roller's length to each cylindrical roller's diameter is greater than one.
12. The gas turbine engine of any preceding clause, wherein the one or more compressors of the compressor section includes a low pressure compressor, wherein the one or more turbines of the turbine section includes a low pressure turbine, and wherein the shaft is a low pressure shaft mechanically coupling the low pressure compressor to the low pressure turbine.
13. The planet gearbox of any preceding clause, wherein the ratio of each cylindrical roller's length to each cylindrical roller's diameter is greater than 1.3.
14. The planet gearbox of any preceding clause, wherein each cylindrical roller has a length-to-diameter ratio that falls within the range from 1.3 to 1.8, inclusive.
15. The planet gearbox of any preceding clause, wherein at least a central section of the cylindrical outer surface of each cylindrical roller is disposed uniformly equidistant from the axis of rotation along a central section of the axial length of the cylindrical roller.
16. The planet gearbox of any preceding clause, wherein the gearing surface of each cylindrical outer race is a double helical gearing surface with the bias of each one of the two double helical gearing surfaces of the outer race being disposed nonparallel with the other one of the two double helical gearing surfaces of the outer race.
17. The planet gearbox of any preceding clause, further comprising a respective roller cage disposed between the inner race and the outer race and configured to maintain in each respective track, a respective separation in the circumferential direction between each respective cylindrical roller in each pair of adjacent cylindrical rollers in that respective track, wherein each respective track is defined by a pair of guiderails, which are spaced apart from each other in the axial direction and extend circumferentially around the inner race and provide respective guiding surfaces to each respective roller cage.
18. The planet gearbox of any preceding clause, wherein the roller cage defines a first circumferential row and a second circumferential row separated in the axial direction from the first circumferential row, each circumferential row of the roller cage being disposed above a respective track of the pair of tracks of the inner race, each circumferential row defining a plurality of generally cylindrical openings, each generally cylindrical opening defining a major axis in the axial direction and a minor axis in the circumferential direction, the openings in each row being spaced equidistantly apart circumferentially around the cage with the number of openings in each row being equal to the number of cylindrical rollers disposed in the respective one of the pair of tracks disposed beneath the respective row of the roller cage, wherein each respective cylindrical roller is disposed with its cylindrical surface extending through a respective opening defined by the roller cage.
19. The planet gearbox of any preceding clause, wherein the outer surface of the inner race is concentric with the inner cylindrical surface of the inner race, each respective track extending circumferentially around the outer surface of the inner race, each respective track being separated in the axial direction from any other respective track, each respective track being disposed parallel in the circumferential direction with respect to any other respective track.
20. The planet gearbox of any preceding clause, wherein the inner cylindrical surface of the inner race is press-fitted to the cylindrical outer surface of the support pin.

## Claims

1. A planet gearbox for connection to a carrier of an epicyclic gearing arrangement that has only a single input and a single output and that includes a sun gear (80) and a ring gear (86) disposed circumferentially around the planet gearbox and the sun gear (80), the planet gearbox comprising:
a support pin (96) configured to be fixed to the carrier and defining a cylindrical outer surface (101) that is equidistant from a central axis (106) that extends in an axial direction (A);
an inner race (102) defining a cylindrical inner surface (112) that is non-rotatably connected to the cylindrical outer surface (101) of the support pin (96), the inner race (102) defining an outer surface that defines at least one track, each track defined in the outer surface being configured to receive and rotatably guide therein a respective plurality of cylindrical rollers (104);
a respective plurality of cylindrical rollers (104) rotatably disposed within each respective track of the inner race (102);
an outer race defining a cylindrical interior surface (103) contacting each respective plurality of cylindrical rollers (104), the outer race defining a cylindrical outer surface that defines a gearing surface (85) that is configured to mesh with both the sun gear (80) and the ring gear (86);
wherein each cylindrical roller (104) defines a cylindrical outer surface (114) that is disposed with an axis of rotation that extends in a direction parallel to the axial direction, and the cylindrical outer surface (114) of each cylindrical roller (104) is defined by a diameter that extends through the axis of rotation along a direction that is normal to the axis of rotation; and
wherein the outer cylindrical surface of each cylindrical roller (104) defines a length in the direction parallel to the axis of rotation of the cylindrical roller (104), and the ratio of each cylindrical roller's length (L) to each cylindrical roller's diameter (D) is greater than one.

2. The planet gearbox of claim 1, wherein the ratio of each cylindrical roller's length (L) to each cylindrical roller's diameter (D) is greater than 1.3.

3. The planet gearbox of either of claim 1 or 2, wherein each cylindrical roller (104) has a length-to-diameter ratio that falls within the range from 1.3 to 1.8, inclusive.

4. The planet gearbox of any preceding claim, wherein at least a central section of the cylindrical outer surface of each cylindrical roller is disposed uniformly equidistant from the axis of rotation along a central section of the axial length of the cylindrical roller.

5. The planet gearbox of any preceding claim, wherein the gearing surface of the outer race is a double helical gearing surface with the bias of each one of the two double helical gearing surfaces of the outer race being disposed nonparallel with the other one of the two double helical gearing surfaces of the outer race.

6. The planet gearbox of any preceding claim, further comprising for each respective track a respective roller cage disposed between the inner race (102) and the outer race and configured to maintain in each respective track, a respective separation between each respective cylindrical roller (104) in each pair of adjacent cylindrical rollers (104) in that respective track, wherein each respective track is defined by a pair of guiderails, which are spaced apart from each other in the axial direction and extend circumferentially around the inner race (102) and provide respective guiding surfaces to each respective roller cage.

7. The planet gearbox of claim 6, wherein each respective roller cage defines a circumferential row, each circumferential row of the respective roller cage being disposed above a respective track of the inner race, each circumferential row defining a plurality of generally cylindrical openings, each generally cylindrical opening defining a major axis in the axial direction and a minor axis in the circumferential direction, the openings in each row being spaced equidistantly apart circumferentially around the respective roller cage with the number of openings in each row being equal to the number of cylindrical rollers disposed in the respective track disposed beneath the respective row of the respective roller cage, wherein each respective cylindrical roller is disposed with its cylindrical outer surface extending through a respective opening defined by the respective roller cage.

8. The planet gearbox of any preceding claim, wherein each respective track extends circumferentially around the outer surface of the inner race, each of the pair of tracks being separated in the axial direction from the other of the pair of tracks, each of the pair of tracks being disposed parallel in the circumferential direction with respect to the other of the pair of tracks, each of the pair of tracks defining a raceway surface extending circumferentially and concentrically with respect to the inner cylindrical surface of the inner race and contacting a portion of each of the cylindrical outer surfaces of the cylindrical rollers disposed in the respective track, each of the pair of tracks defining a pair of radially extending sidewalls that are spaced apart in the axial direction from each other.

9. The planet gearbox of any preceding claim, wherein the inner cylindrical surface of the inner race (102) is press-fitted to the cylindrical outer surface (101) of the support pin (96).

10. The planet gearbox of any preceding claim, wherein each of the cylindrical rollers (104) is formed of ceramic material.

11. A gas turbine engine (10) comprising:
a fan (38) including a plurality of blades (40) extending radially from a hub (48) and rotatable about a first axis of rotation (12) defined centrally through the hub (48);
a compressor section disposed downstream from the fan (38) and including one or more compressors (22, 24);
a turbine section located downstream of the compressor section, the turbine section including one or more turbines (28, 30);
a rotatable input shaft (36) mechanically coupling at least one of the one or more compressors (22) of the compressor section to rotate in unison with at least one of the one or more turbines (30) of the turbine section;
an epicyclic gearing arrangement that has only a single input and a single output and that includes a carrier, a sun gear (80) rotatable about a second axis of rotation that is parallel to the first axis of rotation (12), a ring gear (86) disposed circumferentially around the sun gear (80), at least one planet gearbox that is carried by the carrier and houses a planet gear (84) rotatable with respect to the carrier about a third axis of rotation (106) that is parallel to the first axis of rotation (12), the at least one planet gear (84) meshes with both the sun gear (80) and the ring gear (86); and
an engine envelope (50) surrounding the fan (38), the compressors (22, 24), the turbines (30, 32) and the epicyclic gearing arrangement, wherein only one of the ring gear (86) and the carrier is non-rotatably coupled to the engine envelope (50); and
the planet gearbox further including:
a support pin (96) fixed to the carrier and defining a cylindrical outer surface (101) that is equidistant from a central axis (106) that extends in an axial direction,
an inner race (102) defining a cylindrical inner surface (112) that is non-rotatably connected to the cylindrical outer surface (101) of the support pin (96), the inner race (102) defining an outer surface that defines a at least one track that is configured to receive and rotatably guide therein a respective plurality of cylindrical rollers (104),
an outer race defining an inner cylindrical surface (103) and an outer cylindrical surface that defines a gearing surface (85) of the planet gear (84) and that is configured to mesh with both the sun gear (80) and the ring gear (86),
a plurality of cylindrical rollers (104) wherein the individual cylindrical rollers (104) being distributed between each track of the inner race (102), each cylindrical roller (104) being free to rotate about a fourth axis of rotation that is parallel to the second axis of rotation, each cylindrical roller (104) defining a cylindrical outer surface (114) contacting both the inner race (102) and the cylindrical inner surface (103) of the outer race (84), each cylindrical roller defining a length (L) in the direction parallel to the third axis of rotation and wherein the length (L) to diameter (D) ratio of each cylindrical roller (104) is greater than one.

12. The gas turbine engine of claim 11, wherein the one or more compressors of the compressor section includes a low pressure compressor (22), wherein the one or more turbines of the turbine section includes a low pressure turbine (30), and wherein the shaft is a low pressure shaft (36) mechanically coupling the low pressure compressor (22) to the low pressure turbine (30).

13. The planet gearbox of either of claims 11 or 12, wherein the ratio of each cylindrical roller's length to each cylindrical roller's diameter is greater than 1.3.

14. The gas turbine engine of any of claims 11 to 13, wherein each cylindrical roller (104) has a length-to-diameter ratio that falls within the range from 1.3 to 1.8, inclusive.

15. The planet gearbox of any of claims 11 to 14, wherein at least a central section of the cylindrical outer surface of each cylindrical roller is disposed uniformly equidistant from the axis of rotation along a central section of the axial length of the cylindrical roller.
